# EUROPEAN PATENT APPLICATION

(11) **EP 1 630 644 A2**
(43) Date of publication of application: **01.03.2006**
(21) Application number: 05018389.6
(22) Date of filing: 24.08.2005
(51) Int. Cl.: G06F 1/32

(54) **Serial communication control in a wireless communication system**

(30) Priority: 24.08.2004 KR 2004066870
(71) Applicant: LG Electronics Inc., Yongdungpo-gu Seoul (KR)
(72) Inventor: Oh, Hyung-Suk, 3-Dong, Gwangmyeong, Gyeonggi-Do (KR)
(74) Representative: von Hellfeld, Axel

(57) **Abstract**

A mobile station for serial communication control in a wireless network comprises a personal assistant module adapted to transmit an operation signal to a serial port of the personal assistant module to enable serial communication with a mobile station processor. The mobile station also comprises the mobile station processor coupled to the personal assistant module, adapted to be switched to an operating state to enable communication of data with the personal assistant module when the operation signal is an activation signal, and adapted to release a communication establishment with the personal assistant module when the operation signal is a deactivation signal.

## Description

### FIELD OF THE INVENTION

The present invention relates generally to a wireless communication system and, more particularly, to serial communication in a wireless communication system.

### BACKGROUND OF THE INVENTION

A personal digital assistant (PDA) is a portable personal information terminal capable of storing document files composed by a computer at home or office. The PDA has conventionally been limited to uses such as performing calculations and managing schedules. However, as information communication techniques develop, potential uses of the PDA are being broadened.

A PDA-type mobile station combines PDA functions with functions of a mobile station. Such a PDA-type mobile station may be operated using an operating system similar to personal computers. As a result, the PDA-type mobile station may be compatible with personal computers and may provide users with various information services, such as traffic and/or weather information, and also provide functions for wireless voice and fax.

A PDA-type mobile station based on a Code Division Multiple Access (CDMA) method may include a CDMA module for managing transmission and reception of a mobile communication signal, and a PDA module for supporting PDA functions and services. The CDMA module and the PDA module are connected to each other through a UART port.

The Universal Asynchronous Receiver Transmitter (UART) is a device for processing an asynchronous serial communication. In a typical mobile station, the UART performs such functions as monitoring a specific device and downloading binary files (e.g., script files, Perl script files). The UART may also perform such functions as Bluetooth, a Removable User Identification Module = UIM (RUIM), and/or an Infrared Data Association (IrDA).

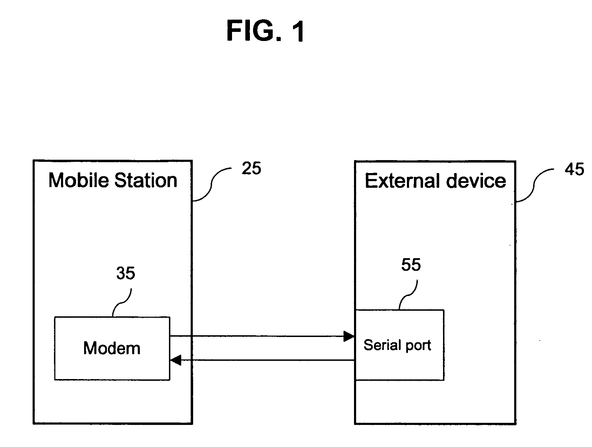

Fig. 1 is a block diagram illustrating an exemplary serial communication in a mobile station. Referring to Fig. 1, a mobile station 25 includes a modem 35. The modem 35 is operatively connected to a serial port 55 of an external device 45.

Referring to Fig. 1, the UART of a typical mobile station is physically connected to a communication port (e.g., UART port, Bluetooth, RUIM, or IrDA) of an external device (e.g., personal computer) by a user. The physical connection between two devices is released by the user after the communication between the mobile station and the external device is completed. That is, the two devices are temporarily connected while communication is performed.

However, the UART of the PDA-type mobile station, unlike the UART of the typical mobile station, has a structure in which the CDMA modem is always physically connected to the PDA module. A state of a device within the PDA-type mobile station or a control command must by transmitted by a High Level Data Link Control (HDLC) packet format or an Authoring Tool (AT) command format. Accordingly, the UART of the PDA-type mobile station requires a separate UART clock control algorithm.

In serial communication of the mobile station, because the physical connection between both sides (i.e., the CDMA modem and the external device) that perform the serial communication is established only during the communication, limited battery power is consumed. However, in serial communication of the PDA-type mobile station, both sides (i.e., the CDMA modem and the external device) that perform the serial communication are constantly connected. Accordingly, when serial communication of the typical mobile station is applied to the PDA-type mobile station, the PDA-type mobile station continuously generates a UART clock signal, and the CDMA modem maintains a wake state. As a result, the PDA-type mobile station consumes more battery power, which reduces terminal usage time.

### SUMMARY OF THE INVENTION

Accordingly, the present invention is directed to serial communication control that substantially obviates one or more problems due to limitations and disadvantages of the related art.

An object of the present invention is to provide serial communication control of a PDA-type mobile station capable of switching between a sleep state and an operating state.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, in one embodiment, a mobile station for serial communication control in a wireless network comprises a personal assistant module adapted to transmit an operation signal to a serial port of the personal assistant module to enable serial communication with a mobile station processor. The mobile station also comprises the mobile station processor coupled to the personal assistant module, adapted to be switched to an operating state to enable communication of data with the personal assistant module when the operation signal is an activation signal, and adapted to release a communication establishment with the personal assistant module when the operation signal is a deactivation signal.

The mobile station processor may be switched to a sleep state in response to the release of the communication establishment when the deactivation signal is transmitted to the serial port of the personal assistant module. The mobile station processor may generate a serial port clock when the activation signal is transmitted to the serial port of the personal assistant module. The mobile station processor may also stop generation of a serial port clock when the deactivation signal is transmitted to the serial port of the personal assistant module. The mobile station processor may also change a clock source to apply to the operating state in response to being switched to the operating state.

The mobile station processor may be a code division multiple access (CDMA) modem. The serial port of the personal assistant module may be a universal asynchronous receiver transmitter (UART) port. The operation signal may be transmitted to a pin of the serial port of the personal assistant module. The pin of the serial port of the personal assistant module may be a data transmission ready (DTR) pin.

In another embodiment, a serial communication control method of a mobile station comprising a personal assistant module and a mobile station processor in a wireless communication system comprises applying an activation signal to a serial port of the personal assistant module. The method also comprises switching the mobile station processor to an operating state in response to application of the activation signal to the serial port of the personal assistant module. The method also comprises communicating data between the personal assistant module and the mobile station processor in response to the switching of the mobile station processor to the operating state.

The method also may comprise initializing the serial port of the personal assistant module in response to the application of the activation signal to the serial port of the personal assistant module. The initializing step may comprise generating a serial port clock. The personal assistant module may apply the activation signal to the serial port of the personal assistant module in response to data generation.

The method may further comprise applying a deactivation signal to the serial port of the personal assistant module, and switching the mobile station processor to a sleep state in response to application of the deactivation signal to the serial port of the personal assistant module. The personal assistant module may apply the deactivation signal to the serial port of the personal assistant module in response to completion of data transmission.

The step of switching the mobile station processor to the operating state may comprise changing a clock speed supplied to the mobile station processor to apply to the operating state. The step of switching the mobile station processor to the sleep state may comprise changing a clock speed supplied to the mobile station processor to apply to the sleep state. The step of switching the mobile station processor to the sleep state may also comprise stopping generation of a serial port clock.

In another embodiment, a serial communication control method of a mobile station comprising a personal assistant module and a mobile station processor in a wireless communication system comprises checking a pin of a serial port of the personal assistant module. The method also comprises, when the pin is switched to a first state, generating a first interrupt and performing a serial communication between the personal assistant module and the mobile station processor. The method also comprises, when the pin is switched to a second state, generating a second interrupt and releasing the serial communication between the personal assistant module and the mobile station processor.

The step of checking the pin of the serial port may be performed according to a polling method. The step of generating the first interrupt and performing the serial communication between the personal assistant module and the mobile station processor may be performed according to a first interrupt processing routine. The first interrupt processing routine may comprise switching the mobile station processor to an operating state and initializing a serial port of the mobile station processor. The first interrupt processing routine may also comprise generating a serial port clock of the mobile station processor and releasing the first interrupt registered at an interrupt vector table. The first interrupt processing routine may also comprise performing the serial communication between the personal assistant module and the mobile station processor. The step of performing the serial communication between the personal assistant module and the mobile station processor may comprise registering the second interrupt at the interrupt vector table to prepare for switching of the pin to a low state.

The step of generating a second interrupt and releasing the serial communication between the personal assistant module and the mobile station processor may be performed according to a second interrupt processing routine. The second interrupt processing routine may comprise stopping generation of a serial port clock of the mobile station processor, and releasing the second interrupt registered at an interrupt vector table. The second interrupt processing routine may also comprise switching the mobile station processor to a sleep state. The step of releasing the second interrupt registered at the interrupt vector table may comprise registering the first interrupt at the interrupt vector table to prepare for switching of the pin to a high state.

The pin may be switched to the first state in response to application of a current greater than a reference value current. Furthermore, the pin may be switched to the second state in response to application of a current less than a reference value current.

The foregoing and other objects, features, aspects and advantages of the present invention will become more apparent from the following detailed description of the present invention when taken in conjunction with the accompanying drawings. It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principles of the invention.

Fig. 1 is a block diagram illustrating an exemplary serial communication in a mobile station.

Fig. 2 is a block diagram illustrating an exemplary serial communication in a PDA-type mobile station, according to an embodiment of the present invention.

Fig. 3 is a flow diagram illustrating a serial communication control method, according to an embodiment of the present invention.

Fig. 4 is a flow diagram illustrating a high detection interrupt routine, according to an embodiment of the present invention.

Fig. 5 is a flow diagram illustrating a low detection interrupt routine, according to an embodiment of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

In a preferred embodiment of the present invention, separate wake-up pins are provided for transmission (Tx) and reception (Rx) in a PDA module and a CDMA modem to allow the CDMA modem to be activated when a certain signal is applied to the wake-up pins. The CDMA modem maintains a deactivated state when the certain signal is not being applied. The mobile station referred to herein may be a user equipment (UE) or other type of mobile station. A PDA-type mobile station includes a processor, such as a mobile station modem (mobile station processor). The mobile station modem may be a CDMA modem, or other type of modem or processor. The PDA-type mobile station also includes a PDA module (personal assistant module). Although the present invention is described with respect to CDMA, the present invention may also be used in conjunction with other air interfaces, such as GSM (Global System for Mobile Communications).

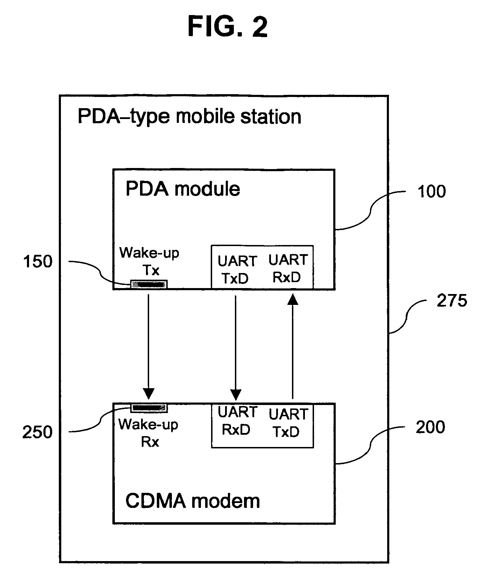

Fig. 2 is a block diagram illustrating an exemplary serial communication in a PDA-type mobile station, according to an embodiment of the present invention. As such, Fig. 2 shows a construction of a PDA-type mobile station that uses a Code Division Multiple Access (CDMA) method.

Referring to Fig. 2, a PDA-type mobile station 275 includes a PDA module 100 for applying a current (activation signal) that is greater than a reference value, and/or for applying a current (deactivation signal) that is less than the reference value to a wake-up Tx pin 150 for a serial communication. The PDA-type mobile station 275 also includes a CDMA modem 200 for receiving data from the PDA module after being switched to an operating state (e.g., wake state) when the activation signal is applied to the wake-up pins 150 and 250. The CDMA modem 200 releases communication with the PDA module 100 when the deactivation signal is applied. When the deactivation signal is applied, the CDMA modem 200 is switched to a deactivated state (e.g., sleep state).

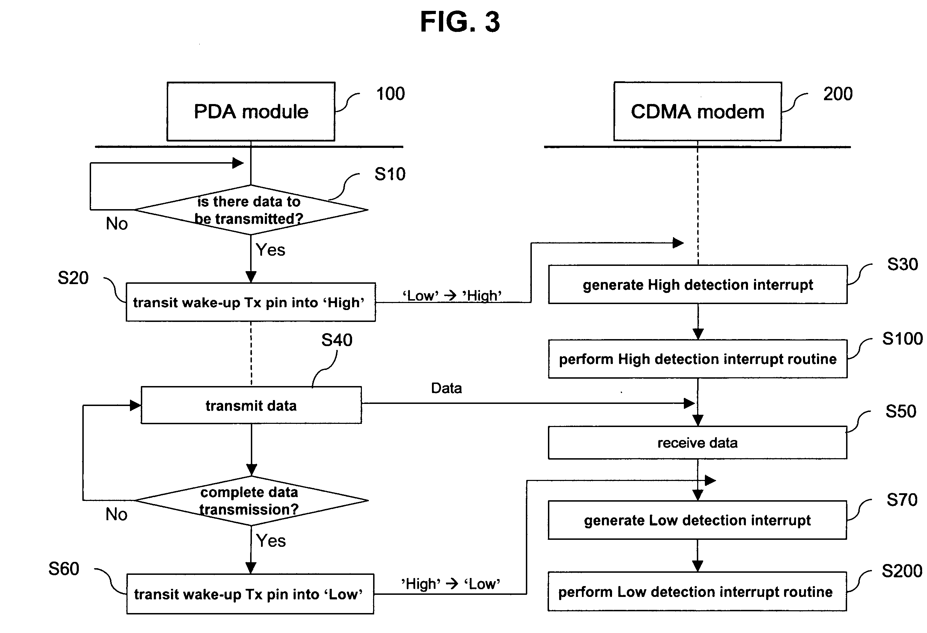

Fig. 3 is a flow diagram illustrating a serial communication control method, according to an embodiment of the present invention.

Referring to Figs. 2 and 3, preferred embodiments of the present invention are described below.

The CDMA modem 200 registers a high detection interrupt routine related to the wake-up Rx pin 250 at an interrupt vector table. The CDMA modem 200 is then switched to a sleep state during initialization of the PDA-type mobile station.

After initialization of the PDA-type mobile station, the CDMA modem 200 polls the wake-up Rx pin 250 in a certain period (e.g., 50ms). The CDMA modem 200 then checks the status variation (e.g., low→high, or high→low) of the Rx pin 250.

When data is generated for transmission to the CDMA modem 200, the PDA module 100 applies a high level current to the wake-up Tx pin 150 to thereby switch the wake-up pins 150 and 250 to the high state (S10 and S20). After sensing the status variation (e.g., low→high) of the wake-up Rx pin 250, the CDMA modem 200 generates a high detection interrupt (S30). The CDMA modem 200 then operates according to a high detection interrupt routine pre-registered at an interrupt vector table (S100).

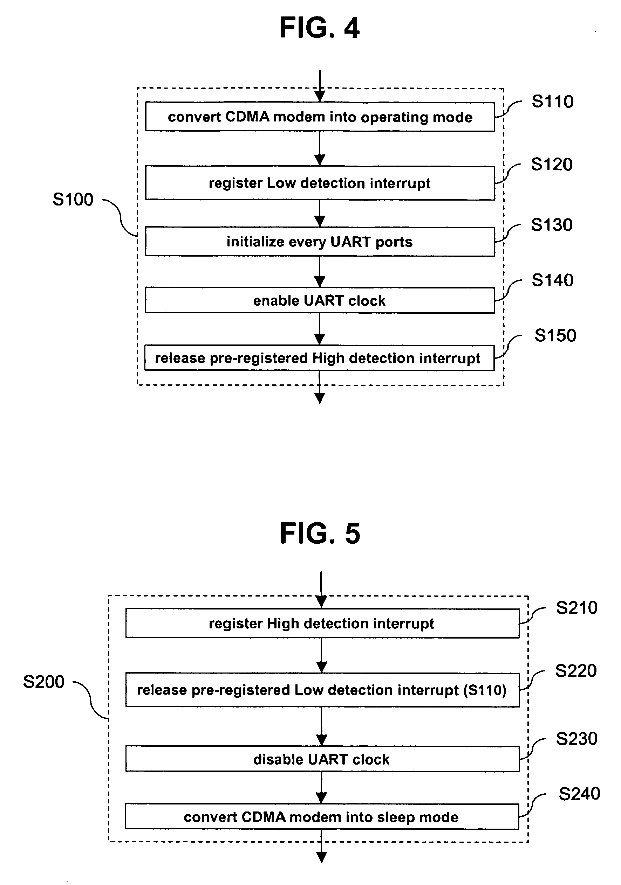

Fig. 4 is a flow diagram illustrating a high detection interrupt routine, according to an embodiment of the present invention.

Referring to Fig. 4, when the high detection interrupt is generated, the PDA module 100 switches the CDMA modem 200 from the sleep state to the operating state (S110). The CDMA modem 200 then registers a low detection interrupt routine at an interrupt vector table to prepare for switching of the wake-up pins 150 and 250 to a low state (S120). When the CDMA modem 200 is switched to the operating state, a clock source supplied to the CDMA modem 200 may also be changed to, for example, a Temperature Compensated X-tal Oscillator (TCXO) crystal (e.g., 19.68MHz), applicable to the operating state.

The CDMA modem 200 then initializes register values of its UART ports (e.g., UART-1 UART-2, ..., UART-n) (S130), and enables a UART clock (e.g., 19.68MHz) (S140). The CDMA modem 200 then releases the high detection interrupt for the wake-up Rx pin 250 that is registered at the interrupt vector table (S150).

After checking whether steps S110 to S150 are successfully performed, the PDA module 100 transmits the generated data to the CDMA modem 200 through one of the serial communication ports UART-1 UART-2, ..., UART-n (S40 and S50).

After the data is successfully transmitted, the PDA module 100 applies a low level current to the wake-up Tx pin 150 and to switch the wake-up pins 150 and 250 to a low state in order to release a communication establishment with the CDMA modem 200 (S60). After sensing the status variation (e.g., high→low) of the wake-up Rx pin 250, the CDMA modem 200 generates a low detection interrupt (S70). The CDMA modem 200 then operates according to a low detection interrupt routine registered in the interrupt routine table (S200).

Fig. 5 is a flow diagram illustrating a low detection interrupt routine, according to an embodiment of the present invention.

Referring to Fig. 5, when the low detection interrupt is generated, the CDMA modem 200 releases the low detection interrupt and registers a high detection interrupt routine at the interrupt vector table to prepare for switching of the wake-up pins 150 and 250 to the high state (S210 and S220). The CDMA modem 200 then disables the UART clock (e.g., 19.68MHz) (S230).

After the steps S210 to S230 are successfully performed, the PDA module 100 switches the CDMA modem 200 from the operating state to the deactivated state (S240). When the CDMA modem 200 is switched to the deactivated state, the clock source supplied to the CDMA modem 200 may also be changed to, for example, the TCXO crystal (e.g., 19.68MHz), applicable to the deactivated state.

The PDA-type mobile station may utilize Data Transmission Ready pins of a serial port (e.g., UART) as wake-up pins. However, it is preferable to use separate wake-up pins 150 and 250.

In one embodiment, a mobile station for serial communication control in a wireless network comprises a personal assistant module adapted to transmit an operation signal to a serial port of the personal assistant module to enable serial communication with a mobile station processor. The mobile station also comprises the mobile station processor coupled to the personal assistant module, adapted to be switched to an operating state to enable communication of data with the personal assistant module when the operation signal is an activation signal, and adapted to release a communication establishment with the personal assistant module when the operation signal is a deactivation signal.

The mobile station processor may be switched to a sleep state in response to the release of the communication establishment when the deactivation signal is transmitted to the serial port of the personal assistant module. The mobile station processor may generate a serial port clock when the activation signal is transmitted to the serial port of the personal assistant module. The mobile station processor may also stop generation of a serial port clock when the deactivation signal is transmitted to the serial port of the personal assistant module. The mobile station processor may also change a clock source to apply to the operating state in response to being switched to the operating state.

The mobile station processor may be a code division multiple access (CDMA) modem. The serial port of the personal assistant module may be a universal asynchronous receiver transmitter (UART) port. The operation signal may be transmitted to a pin of the serial port of the personal assistant module. The pin of the serial port of the personal assistant module may be a data transmission ready (DTR) pin.

In another embodiment, a serial communication control method of a mobile station comprising a personal assistant module and a mobile station processor in a wireless communication system comprises applying an activation signal to a serial port of the personal assistant module. The method also comprises switching the mobile station processor to an operating state in response to application of the activation signal to the serial port of the personal assistant module. The method also comprises communicating data between the personal assistant module and the mobile station processor in response to the switching of the mobile station processor to the operating state.

The method also may comprise initializing the serial port of the personal assistant module in response to the application of the activation signal to the serial port of the personal assistant module. The initializing step may comprise generating a serial port clock. The personal assistant module may apply the activation signal to the serial port of the personal assistant module in response to data generation.

The method may further comprise applying a deactivation signal to the serial port of the personal assistant module, and switching the mobile station processor to a sleep state in response to application of the deactivation signal to the serial port of the personal assistant module. The personal assistant module may apply the deactivation signal to the serial port of the personal assistant module in response to completion of data transmission.

The step of switching the mobile station processor to the operating state may comprise changing a clock speed supplied to the mobile station processor to apply to the operating state. The step of switching the mobile station processor to the sleep state may comprise changing a clock speed supplied to the mobile station processor to apply to the sleep state. The step of switching the mobile station processor to the sleep state may also comprise stopping generation of a serial port clock.

In another embodiment, a serial communication control method of a mobile station comprising a personal assistant module and a mobile station processor in a wireless communication system comprises checking a pin of a serial port of the personal assistant module. The method also comprises, when the pin is switched to a first state, generating a first interrupt and performing a serial communication between the personal assistant module and the mobile station processor. The method also comprises, when the pin is switched to a second state, generating a second interrupt and releasing the serial communication between the personal assistant module and the mobile station processor.

The step of checking the pin of the serial port may be performed according to a polling method. The step of generating the first interrupt and performing the serial communication between the personal assistant module and the mobile station processor may be performed according to a first interrupt processing routine. The first interrupt processing routine may comprise switching the mobile station processor to an operating state and initializing a serial port of the mobile station processor. The first interrupt processing routine may also comprise generating a serial port clock of the mobile station processor and releasing the first interrupt registered at an interrupt vector table. The first interrupt processing routine may also comprise performing the serial communication between the personal assistant module and the mobile station processor. The step of performing the serial communication between the personal assistant module and the mobile station processor may comprise registering the second interrupt at the interrupt vector table to prepare for switching of the pin to a low state.

The step of generating a second interrupt and releasing the serial communication between the personal assistant module and the mobile station processor may be performed according to a second interrupt processing routine. The second interrupt processing routine may comprise stopping generation of a serial port clock of the mobile station processor, and releasing the second interrupt registered at an interrupt vector table. The second interrupt processing routine may also comprise switching the mobile station processor to a sleep state. The step of releasing the second interrupt registered at the interrupt vector table may comprise registering the first interrupt at the interrupt vector table to prepare for switching of the pin to a high state.

The pin may be switched to the first state in response to application of a current greater than a reference value current. Furthermore, the pin may be switched to the second state in response to application of a current less than a reference value current.

The present invention may reduce battery power consumption by the CDMA modem by maintaining the CDMA modem in the sleep state when the CDMA modem is not performing serial communication with the PDA module. The CDMA modem is switched from the sleep state to the operating state when the CMDA modem performs the serial communication with the PDA module.

It will be apparent to those skilled in the art that various modifications and variations may be made in the present invention without departing from the spirit or scope of the inventions. Thus, it is intended that the present invention covers the modifications and variations of this invention provided they come within the scope of the appended claims and their equivalents.

## Claims

1. A mobile station for serial communication control in a wireless network, the mobile station comprising:
a personal assistant module adapted to transmit an operation signal to a serial port of the personal assistant module to enable serial communication with a mobile station processor; and
the mobile station processor coupled to the personal assistant module, adapted to be switched to an operating state to enable communication of data with the personal assistant module when the operation signal is an activation signal, and adapted to release a communication establishment with the personal assistant module when the operation signal is a deactivation signal.

2. The mobile station of claim 1, wherein the mobile station processor is switched to a sleep state in response to the release of the communication establishment when the deactivation signal is transmitted to the serial port of the personal assistant module.

3. The mobile station of claim 1, wherein the mobile station processor generates a serial port clock when the activation signal is transmitted to the serial port of the personal assistant module.

4. The mobile station of claim 1, wherein the mobile station processor stops generation of a serial port clock when the deactivation signal is transmitted to the serial port of the personal assistant module.

5. The mobile station of claim 1, wherein the mobile station processor changes a clock source to apply to the operating state in response to being switched to the operating state.

6. The mobile station of claim 1, wherein the mobile station processor is a code division multiple access (CDMA) modem.

7. The mobile station of claim 1, wherein the serial port of the personal assistant module is a universal asynchronous receiver transmitter (UART) port.

8. The mobile station of claim 6, wherein the operation signal is transmitted to a pin of the serial port of the personal assistant module.

9. The mobile station of claim 1, wherein the pin of the serial port of the personal assistant module is a data transmission ready (DTR) pin.

10. A serial communication control method of a mobile station comprising a personal assistant module and a mobile station processor in a wireless communication system, the method comprising:
applying an activation signal to a serial port of the personal assistant module; switching the mobile station processor to an operating state in response to application of the activation signal to the serial port of the personal assistant module; and
communicating data between the personal assistant module and the mobile station processor in response to the switching of the mobile station processor to the operating state.

11. The method of claim 9, further comprising:
initializing the serial port of the personal assistant module in response to the application of the activation signal to the serial port of the personal assistant module.

12. The method of claim 10, wherein the initializing step comprises generating a serial port clock.

13. The method of claim 9, wherein the personal assistant module applies the activation signal to the serial port of the personal assistant module in response to data generation.

14. The method of claim 9, further comprising:
applying a deactivation signal to the serial port of the personal assistant module; and
switching the mobile station processor to a sleep state in response to application of the deactivation signal to the serial port of the personal assistant module.

15. The method of claim 13, wherein the personal assistant module applies the deactivation signal to the serial port of the personal assistant module in response to completion of data transmission.

16. The method of claim 9, wherein the step of switching the mobile station processor to the operating state comprises changing a clock speed supplied to the mobile station processor to apply to the operating state.

17. The method of claim 13, wherein the step of switching the mobile station processor to the sleep state comprises changing a clock speed supplied to the mobile station processor to apply to the sleep state.

18. The method of claim 13, wherein the step of switching the mobile station processor to the sleep state comprises stopping generation of a serial port clock.

19. A serial communication control method of a mobile station comprising a personal assistant module and a mobile station processor in a wireless communication system, the method comprising:
checking a pin of a serial port of the personal assistant module;
when the pin is switched to a first state, generating a first interrupt and performing a serial communication between the personal assistant module and the mobile station processor; and
when the pin is switched to a second state, generating a second interrupt and releasing the serial communication between the personal assistant module and the mobile station processor.

20. The method of claim 18, wherein the step of checking the pin of the serial port is performed according to a polling method.

21. The method of claim 18, wherein the step of generating the first interrupt and performing the serial communication between the personal assistant module and the mobile station processor is performed according to a first interrupt processing routine, the first interrupt processing routine comprising:
switching the mobile station processor to an operating state;
initializing a serial port of the mobile station processor;
generating a serial port clock of the mobile station processor;
releasing the first interrupt registered at an interrupt vector table; and
performing the serial communication between the personal assistant module and the mobile station processor.

22. The method of claim 20, wherein the step of performing the serial communication between the personal assistant module and the mobile station processor comprises registering the second interrupt at the interrupt vector table to prepare for switching of the pin to a low state.

23. The method of claim 18, wherein the step of generating a second interrupt and releasing the serial communication between the personal assistant module and the mobile station processor is performed according to a second interrupt processing routine, the second interrupt processing routine comprising:
stopping generation of a serial port clock of the mobile station processor;
releasing the second interrupt registered at an interrupt vector table; and
switching the mobile station processor to a sleep state.

24. The method of claim 22, wherein the step of releasing the second interrupt registered at the interrupt vector table comprises registering the first interrupt at the interrupt vector table to prepare for switching of the pin to a high state.

25. The method of claim 18, wherein the pin is switched to the first state in response to application of a current greater than a reference value current.

26. The method of claim 18, wherein the pin is switched to the second state in response to application of a current less than a reference value current.
